# EUROPÄISCHE PATENTANMELDUNG

(11) **EP 3 366 129 A1**
(43) Veröffentlichungstag der Anmeldung: **29.08.2018**
(21) Anmeldenummer: 18150571.0
(22) Anmeldetag: 08.01.2018
(51) Int. Cl.: A01M 7/00

(54) **LANDWIRTSCHAFTLICHE FELDSPRITZE UND VERFAHREN ZUM AUSBRINGEN VON FLÜSSIGEN PFLANZENSCHUTZMITTELN**

(30) Priorität: 22.02.2017 DE 102017103645
(71) Anmelder: HORSCH LEEB Application Systems GmbH, 94562 Oberpöring (DE)
(72) Erfinder: ZINK, Florian, 94562 Oberpöring (DE)
(74) Vertreter: Benninger, Johannes

(57) **Zusammenfassung**

Es ist ein landwirtschaftliche Feldspritze (10) zum Ausbringen von flüssigen Pflanzenschutzmitteln offenbart, wobei die Verteilung mittels zumindest einer, an einem höhenverstellbar an der Feldspritze (10) angebauten Spritzgestänge (22) montierten Ausbringvorrichtung (24) erfolgt, wobei die Ausbringvorrichtung (24) dazu ausgebildet ist auf Basis von zumindest drei Stellgrößen verschiedenartige Verteilmuster (26) zu erzeugen, um eine Feldspritze bzw. eine Ausbringvorrichtung zu schaffen, mittels derer beliebige Verteilmuster erzeugt werden können ohne hierfür verschiedene Spritzdüsen oder Mehrfachdüsenkörper zu benötigen, sowie die Anzahl an benötigten Aktoren auf ein Minimum zu reduzieren ist vorgesehen, dass die drei Stellgrößen jeweils variabel Einstellbar sind und eine erste Stellgröße durch ein Druckniveau definiert ist, mittels welchem Druckniveau das Pflanzenschutzmittel mittels einer Leitung (34) entlang des Spritzgestänges (22) befördert wird, sowie das eine zweite Stellgröße durch eine Definition der Ausbringmenge definiert ist, welche Ausbringmenge mittels eines Volumenstromregler (38) einstellbar ist, sowie das eine dritte Stellgröße durch eine Zerstäubung der Flüssigkeit definiert ist, welche Zerstäubung mittels wenigstens eines Zerstäubungselementes (40) verschiedenartig einstellbar ist.

Darüber hinaus beschreibt die Erfindung ein Verfahren zum Ausbringen von Pflanzenschutzmitteln.

## Beschreibung

Die vorliegende Erfindung betrifft eine landwirtschaftliche Feldspritze zum Ausbringen von flüssigen Pflanzenschutzmitteln gemäß den Merkmalen des Oberbegriffs des unabhängigen Anspruchs 1. Die Erfindung betrifft zudem ein Verfahren zum Ausbringen von flüssigen Pflanzenschutzmitteln gemäß den Merkmalen des Oberbegriffs des unabhängigen Anspruchs 17.

Landwirtschaftliche Feldspritzen werden zum Ausbringen bzw. zur Applikation von flüssigen Pflanzenschutzmitteln wie bspw. Pestiziden, Fungiziden, Dünger oder dergleichen verwendet. Derartige Feldspritzen sind mit einer quer zur Fahrrichtung orientierten Verteilvorrichtung bzw. mit einem quer zur Fahrtrichtung orientierten Spritzgestänge in unterschiedlichsten Ausführungsvarianten bekannt, bspw. als selbstfahrende oder mittels eines Zugfahrzeuges gezogene oder als an einem Zugfahrzeug angebaute Feldspritzen. Gemeinsames Ziel dieser Feldspritzen ist es, ein definiertes Volumen an Pflanzenschutzmittel gleichmäßig bzw. in definierbarer Intensität auf einer landwirtschaftlichen Fläche bzw. auf einem Pflanzenbestand auszubringen, wobei das Verteilen jeweils möglichst in Abhängigkeit vom auszubringenden Pflanzenschutzmittel in verschiedensten Verteilmustern erfolgen soll. Die Verteilmuster können hierbei in unterschiedlichen Parametern bzw. Stellgrößen variieren, so bspw. ob die Pflanzenschutzflüssigkeit in grobe oder feine Tropfen zerstäubt wird, ob ein großer oder kleiner Spritzkegel erzeugt wird, mit welchem Druck jeweils das Pflanzenschutzmittel auf dem Pflanzenbestand aufgebracht wird oder dergleichen. Um verschiedenste Verteilmuster erzeugen zu können, sind aus dem Stand der Technik bereits diverse Lösungsansätze bekannt.

Bei bekannten Feldspritzen sind am Spritzgestänge in regelmäßigen Abständen zueinander jeweils sog. Düsenstöcke angebracht, wobei an diesen Düsenstöcken wiederum jeweils wenigstens eine Spritzdüse, in der Regel jedoch mehrere Spritzdüsen, angebracht sind. Die Spritzdüsen erzeugen in Abhängigkeit von ihrem jeweiligen Aufbau einen zum Boden bzw. zum Pflanzenbestand hin ausgerichteten Spritzkegel bzw. ein jeweils von der Spritzdüse abhängiges Verteilmuster. Um das Verteilmuster noch weiter zu variieren, kann unter anderem der Spritzdruck, d.h. das Druckniveau, mit welchem die Pflanzenschutzflüssigkeit entlang des Spritzgestänges gefördert wird, sowie die Ausbringmenge noch geändert werden. Dabei können sowohl das Druckniveau als auch die Ausbringmenge nur innerhalb bestimmter Grenzen, welche wiederum von der Ausgestaltung bzw. dem Aufbau der Spritzdüse abhängig sind, eingestellt werden, da die Spritzdüsen unter anderem jeweils nur für einen bestimmten Druckbereich geeignet sind. Um hier die Flexibilität zu verbessern, finden in bekannten Feldspritzen oftmals sog. Mehrfachdüsenstöcke Verwendung. An solchen Mehrfachdüsenstöcken können jeweils zwei oder vier verschiedene Spritzdüsen mit verschiedenen Aufbauten und Eigenschaften angebracht werden, um somit wiederum verschiedene Verteilmuster erzeugen zu können.

Mehrfachdüsenstöcke sind bspw. durch die EP 2 567 617 A2 oder die EP 1 661 627 A1 bereits offenbart. Nachteilig an derartigen Mehrfachdüsenstöcken ist jedoch, dass für eine große Variabilität an zu erzeugenden Verteilmustern auch eine entsprechend große Anzahl an verschiedenen Spritzdüsen benötigt wird, wobei jedoch selbst bei Verwendung sog. Mehrfachdüsenstöcke mit jeweils bis zu vier verschiedenen Spritzdüsen die Variabilität immer noch beschränkt bleibt, da die Spritzdüsen jeweils feste bzw. nicht veränderbare Einstellparameter bzw. Verteileigenschaften besitzen. D.h., mittels der bekannten Spritzdüsen lassen sich innerhalb eines definierten Druckbereichs jeweils nur bestimmte Verteilmuster erzeugen. Ebenso werden die Spritzdüsen in der Regel jeweils mittels separater Aktoren angesteuert, wodurch bspw. bei einem Mehrfachdüsenstock mit vier Spritzdüsen zur Ansteuerung bis zu vier Aktoren vorhanden sein können, wodurch bspw. bei einem Spritzgestänge mit 36 m Arbeitsbreite und einem Abstand von 25 cm oder 50 cm der Mehrfachdüsenstöcke zueinander mehrere hundert Aktoren vorhanden sein können, welche wiederum sehr teuer und störanfällig sind und welche einen großen Installations- und Montageaufwand nach sich ziehen.

Um noch vielseitigere Verteilmuster erzeugen zu können bzw. um insbesondere die Zerstäubung zu optimieren, sind darüber hinaus noch luftunterstützte Düsen bzw. sog. Injektordüsen bekannt. Eine derartige Injektordüse wurde durch die EP 2 739 400 B1 bekannt. Um ein gewünschtes Tropfenspektrum bzw. eine gewünschte Zerstäubung zu erzeugen, wird einem Flüssigkeitsstrom ein Luftvolumenstrom beigemischt, wodurch der Flüssigkeitsstrom in Abhängigkeit des Luftvolumenstroms zerstäubt wird und somit das Tropfenspektrum bzw. das Verteilmuster variiert werden kann. Eine derartige Luftunterstützung ist jedoch in ihrer Umsetzung sehr aufwendig, da an jedem Düsenstock bzw. an jeder Injektordüse eine Luftversorgung angebracht werden muss. Darüber hinaus ist eine exakte Regelung des Luftvolumenstroms wiederum mit einem entsprechend hohen Regelungsaufwand verbunden.

Darüber hinaus geht aus der DE 195 27 443 A1 eine pulsierend arbeitende Spritzdüse hervor. Bei dieser Spritzdüse wird die Flüssigkeitsabgabe jeweils in definierbaren Intervallen oder Frequenzen unterbrochen, wodurch insbesondere die Ausbringmenge verringert werden soll. Jedoch weisen auch derartige Spritzdüsen mehrere Nachteile auf. So benötigen derartige Spritzdüsen eine aufwendige Ansteuerung, um jeweils die erforderlichen Frequenzen zu erzeugen. Darüber hinaus sind derartige Spritzdüsen nur bis zu einer gewissen Fahrgeschwindigkeit der Feldspritze geeignet, da bspw. bei einer Fahrgeschwindigkeit von 20 km/h und einer Frequenz von 10 Hz bereits eine Wegstrecke von ca. 0,5 m nicht mit Pflanzenschutzmittel behandelt wird. Versuche, diesem Problem durch mehrere pulsierende Spritzdüsen mit verschiedenen Frequenzen zu begegnen, haben sich bislang in der Praxis nicht bewährt bzw. sind sehr teuer. Des Weiteren ist auch mit derartigen Spritzdüsen die Variabilität nach wie vor begrenzt, da beim Einsatz derartiger Spritzdüsen das Verteilmuster wiederum von der Ausführungsform bzw. dem Aufbau der Spritzdüse abhängt.

Ein weiterer Nachteil an den aus dem Stand der Technik bekannten Systemen ist, dass eine schnelle Veränderung der jeweiligen Verteilmuster nur insofern möglich ist, als jeweils verschiedene Spritzdüsen an der Feldspritze bzw. dem Mehrfachdüsenstock angebaut sind. Wird ein Verteilmuster benötigt, welches nicht mit den am Mehrfachdüsenstock vorhandenen Spritzdüsen erzeugt werden kann, muss der Mehrfachdüsenstock bzw. dessen Spritzdüsen durch eine Bedienperson umgebaut werden. Da die aus dem Stand der Technik bekannt gewordenen Spritzdüsen jeweils fest definierte Stellgrößen besitzen, können jeweils nur geringe Veränderungen der Verteilmuster vorgenommen werden.

Eine landwirtschaftliche Verteilmaschine mit einem System zur automatisierten Ansteuerung von Spritzprofilen ist durch die DE 10 2014 112 441 A1 offenbart. Die Ansteuerung der Verteilvorrichtung erfolgt auf Basis von wenigstens zwei in einer Rechnereinheit hinterlegten Spritzprofilen, welche sich aus mehreren Parametern zusammensetzen. Bei Abweichung von wenigstens einem Parameter eines ersten Spritzprofils erfolgt eine automatisierte Ansteuerung der Verteilvorrichtung auf die Parameter des wenigstens einen zweiten Spritzprofils. Diese Lösung hat sich jedoch als nachteilig erwiesen, da jeweils bei Abweichung von wenigstens einem Parameter ein anderes bzw. das zweite Spritzprofil eingestellt wird, und nicht der einzelne Parameter als solcher angepasst wird.

Durch die DE 39 08 963 A1 ist ein Gerät zum Applizieren von Pflanzenschutzmitteln unter geschwindigkeitsabhängiger Direkteinspeisung offenbart. Um eine hohe Dosiergenauigkeit zu erreichen, werden Dosiervorrichtungen verwendet, die das Pflanzenschutzmittel in Mischkammern erst nach Überschreiten eines Mindestausstoßdruckes einspritzen. In diese ist zusätzlich Verdünnungsflüssigkeit über eine Konstantdruckregelung unter geringerem Druck einpumpbar. Ferner sind für jede Teilbreite des Spritzgestänges und/oder für jedes Spritzmittel Hubkolbenpumpen als Dosiervorrichtungen vorgesehen, welche über elektromagnetische Wandler angetrieben und mit konstanter Kolbengeschwindigkeit und konstantem Kolbenhub gefahren werden. Die Steuerung der Arbeitsfrequenz der Hubkolbenpumpen erfolgt über eine Frequenzsteuerung der elektromagnetischen Wandler in Abhängigkeit von der momentanen Fahrgeschwindigkeit der Spritzeinrichtung, der vorgeschriebenen Ausbringmenge und der Konzentration des Pflanzenschutzmittels mittels einer Rechen- und Steuereinheit. Im Praxiseinsatz hat sich diese Lösung aufgrund der geringen Variierbarkeit der Spritzmuster und der komplexen Zusammenhänge als nachteilig erwiesen.

Durch die EP 2 086 690 A1 ist ein Sprinkler beschrieben, welcher ein Gehäuse mit zumindest zwei Düsen umfasst. Der Sprinkler umfasst einen dynamischen Flüssigkeits-Ablenker, welcher der zweiten Düse zugeordnet ist. Der Flüssigkeits-Ablenker kann gegenüber der zweiten Düse in unterschiedlichen Winkel eingestellt werden. Mittels des Flüssigkeits-Ablenkers kann gleichzeitig der Strömungsregler beeinflusst werden, um dadurch Flüssigkeit mit einer definierten Strömungsrate auszubringen. Die Einstellmöglichkeiten zum Ausbringen der Flüssigkeiten bzw. zur Erzeugung eines bestimmten Spritzprofils sind bei dieser Lösung jedoch sehr eingeschränkt.

Eine Vorrichtung zum Zerstäuben eines Wirkstoffs, insbesondere zur Schädlingsbekämpfung sowie zum Pflanzenschutz, ist durch die DE 91 11 204 U1 offenbart. Die Vorrichtung umfasst ein Gehäuse mit einem in einem Einlassabschnitt angeordneten Ventilator, einen stromabwärts des Ventilators angeordneten Luftführungs-Innenmantel, sich zwischen dem Luftführungs-Außenmantel und dem Luftführungs-Innenmantel erstreckende Luftleitprofile und eine Zerstäuberanordnung zum Zerstäuben von zugeführtem Wirkstoff. Die Zerstäuberanordnung umfasst vorzugsweise eine Wirbelstrom- und Ultraschallzerstäubung. Innerhalb des Luftführungs-Innenmantels befindet sich zusätzlich ein Kompressor, der Luft aus der Umgebung ansaugt und die komprimierte Luft der Wirbelstromdüse zuführt. Diese Lösung ist jedoch kostenintensiv und teileaufwändig. Auch lässt sich das Spritzprofil zum Ausbringen des Wirkstoffes nur bedingt einstellen.

Durch die DE 195 36 220 A1 sind ein Düsenmundstück und eine Düse zum Ausbringen eines Fluids offenbart. Das Düsenmundstück besteht zumindest im Bereich der Austrittsöffnungen aus einem elastischen Material, wobei Form und/oder Größe der Austrittsöffnung in Abhängigkeit des Fluiddruckes veränderbar ist. Damit ist bei dieser Lösung lediglich ein variabler Parameter vorhanden, um das Ausbringen bzw. das Verteilmuster der auszubringenden Flüssigkeit zu verändern. Damit hat sich diese Lösung aufgrund der eingeschränkten Flexibilität und Individualität an einstellbaren Spritzmustern als nachteilig erwiesen.

Es sind somit aus dem Stand der Technik bereits verschiedenste Lösungsansätze bekannt, mittels derer versucht wird, die Verteilung von flüssigem Pflanzenschutzmittel zu optimieren, wobei die Variabilität jedoch jeweils begrenzt ist und zudem jeweils von der Anzahl an verschiedenen Spritzdüsen sowie deren Ausführungsform abhängt. Auch ist eine schnelle Anpassung bzw. ein schnelles Verändern der Verteilmuster bislang nicht möglich.

Der Erfindung liegt somit die Aufgabe zugrunde, eine landwirtschaftliche Feldspritze bzw. eine Ausbringvorrichtung für eine derartige Feldspritze zu schaffen, mittels derer nahezu beliebige Verteilmuster erzeugt werden können, ohne hierfür jeweils verschiedene Spritzdüsen zu benötigen, sowie die Anzahl an benötigten Aktoren zur Ansteuerung der Spritzdüsen auf ein Minimum zu reduzieren.

Diese Ziele der Erfindung werden mit einer landwirtschaftlichen Feldspritze mit den Merkmalen des unabhängigen Anspruchs 1 sowie durch ein Verfahren mit den Merkmalen des unabhängigen Anspruchs 17 erreicht, wobei weitere vorteilhafte Ausgestaltungen und Weiterbildungen der Erfindung aus den jeweiligen abhängigen Ansprüchen hervorgehen.

Zur Erreichung der genannten Ziele schlägt die Erfindung eine landwirtschaftliche Feldspritze zum Ausbringen von flüssigen Pflanzenschutzmitteln, wie Pestiziden, Fungiziden, Dünger oder dergleichen flüssigen Wirkstoffen vor. Die Feldspritze kann hierbei sowohl als selbstfahrende oder als mittels Zugfahrzeug gezogene oder als an einem Zugfahrzeug angebaute Feldspritze ausgeführt sein, wobei den Feldspritzen bzw. der erfindungsgemäßen Feldspritze jeweils in deren Arbeitsstellung ein quer zur Fahrtrichtung angebautes und höhenverstellbares Spritzgestänge zugeordnet ist, an welchem Spritzgestänge wiederum zumindest eine Ausbringvorrichtung zur Verteilung des jeweiligen Pflanzenschutzmittels angebaut ist. Vorzugsweise können am Spritzgestänge, insbesondere entlang dessen Längserstreckung, eine Mehrzahl von derartigen Ausbringvorrichtungen in regelmäßigen Abständen von bspw. ca. 25 cm oder ca. 50 cm zueinander angebaut sein. Auch wenn dies in der Praxis gebräuchliche Abstände der Ausbringvorrichtungen voneinander am Gestänge sind, wären hier auch jegliche andere Abstände denkbar, ggf. auch unregelmäßige und/oder jeweils unterschiedliche Abstände.

Um eine Feldspritze bzw. eine Ausbringvorrichtung zu schaffen, mittels derer beliebige Verteilmuster erzeugt werden können, ohne hierfür verschiedene Spritzdüsen oder Mehrfachdüsenkörper zu benötigen, sowie die Anzahl an benötigten Aktoren zur Ansteuerung dieser Spritzdüsen bzw. dieser Ausbringvorrichtungen auf ein Minimum zu reduzieren, ist bei der erfindungsgemäßen landwirtschaftlichen Feldspritze vorgesehen, dass die Ausbringvorrichtung dazu ausgebildet ist, auf Basis von zumindest drei Stellgrößen, welche jeweils variabel einstellbar sein können, verschiedenartige Verteilmuster zu erzeugen. Grundsätzlich können alle drei oder mehr Stellgrößen variabel einstellbar sein, wobei jedoch zumindest eine dieser drei oder mehr Stellgrößen variabel einstellbar ist, während die anderen Stellgrößen vorgegeben sein können.

Die Erfindung kann vorsehen, dass eine erste dieser wenigstens drei Stellgrößen durch ein Druckniveau definiert ist, das für eine Beförderung des flüssigen Wirk- und/oder Pflanzenschutzmittels mittels oder in einer zumindest entlang eines Teilabschnittes des Spritzgestänges verlaufende Leitung sorgt. Mittels dieses variabel einstellbaren Druckniveaus kann sowohl der Volumenstrom des durch die Leitungen beförderten flüssigen Wirk- und/oder Pflanzenschutzmittels beeinflusst werden, aber auch die Breitenverteilung selbst durch höheren oder niedrigeren Druck am Austritt der Flüssigkeit an den Spritzdüsen. Allerdings kann auch vorgesehen sein, dass eine zweite der wenigstens drei Stellgrößen durch eine definierte oder definierbare und/oder variabel steuerbare Ausbringmenge an flüssigem Wirk- und/oder Pflanzenschutzmittel innerhalb eines definierten Zeitraumes gebildet ist, wobei die Ausbringmenge mittels eines Volumenstromreglers einstellbar ist, der in diesem Fall unabhängig oder in Abhängigkeit von der mittels der ersten Stellgröße beeinflussbaren Druckregelung einstellbar sein kann. Darüber hinaus kann eine dritte der wenigstens drei Stellgrößen durch eine Zerstäubung oder einen Zerstäubungsgrad des ausgebrachten flüssigen Wirk- und/oder Pflanzenschutzmittels definiert sein, wobei die Zerstäubung bzw. der Zerstäubungsgrad mittels wenigstens eines Zerstäubungselementes verschiedenartig und/oder variabel einstellbar sein kann.

Neben diesen mindestens drei Stellgrößen können ggf. weitere Stellgrößen verarbeitet werden, was jedoch nicht zwingend zur Verwirklichung der Erfindung erforderlich ist. Durch die Verarbeitung und Berücksichtigung weiterer Stellgrößen können Verteilmuster bzw. Spritzprofile exakter an die jeweiligen externen Umweltbedingungen und/oder an den jeweiligen Pflanzenbestand angepasst werden.

Es kann vorgesehen sein, dass wenigstens zwei der mindestens drei Stellgrößen variabel und unabhängig voneinander einstellbar bzw. variierbar sind, d.h. die wenigstens zwei variablen Stellgrößen können jeweils bspw. mittels separater Aktoren angesteuert und/oder variiert werden. Es kann jedoch wahlweise auch vorgesehen sein, dass die mindestens drei Stellgrößen jeweils variabel und unabhängig voneinander einstellbar bzw. variierbar sind, d.h. die Stellgrößen können jeweils bspw. mittels separater Aktoren angesteuert und/oder variiert werden. Die auf diese Weise gebildete landwirtschaftliche Feldspritze bzw. die somit gebildete Ausbringvorrichtung hat gegenüber den aus dem Stand der Technik bekannt gewordenen Feldspritzen den Vorteil, dass mittels der erfindungsgemäßen landwirtschaftlichen Feldspritze die Ausbringmuster nicht mehr, wie dies zuvor bekannt war, von der Ausgestaltung der Spritzdüsen abhängig sind, sondern dass nunmehr nahezu beliebige Ausbringmuster allein durch Veränderung von zumindest einer der vorzugsweise drei Stellgrößen erreicht bzw. einstellbar sind. Aufgrund der variabel und unabhängig voneinander einstellbaren bzw. variierbaren mindestens drei Stellgrößen können individuelle und an den Pflanzenbestand optimierte Verteilmuster erzeugt werden. Auch kann das Verteilmuster bei einem veränderten Pflanzenbestand und/oder bei veränderten Umwelt- und/oder Ausbringbedingungen unverzüglich an die jeweilige Situation angepasst werden.

Die jeweils zu verteilende Pflanzenschutzflüssigkeit bzw. das zu verteilende flüssige Wirkmittel kann mittels einer Leitung, bspw. in Form einer Ringleitung oder dergleichen entlang des Spritzgestänges gefördert werden, wobei die Förderung der Wirk- und/oder Pflanzenschutzflüssigkeit mittels einer, bspw. elektrisch, hydraulisch, oder mechanisch oder auf andere Weise betriebenen Pumpe und mittels eines definierbaren bzw. variablen bzw. variabel einstellbaren Druckniveaus erfolgen kann. Der in der Leitung erzeugte Druck kann hierbei bspw. durch Veränderung einer Drehzahl der Pumpe variiert werden. Zur Erzeugung des Druckniveaus wären jedoch auch andere Druckerzeugungsglieder einsetzbar, wobei diese insbesondere jeweils so konzipiert sind, dass das Druckniveau der Pflanzenschutzflüssigkeit jeweils variiert werden kann. In Abhängigkeit des Druckes kann bspw. auch die jeweils durch die Leitung geförderte Menge an Pflanzenschutzmittel verändert werden. So kann bspw. bei einem hohen Druck mehr Pflanzenschutzmittel je definiertem Zeitintervall als bei einem geringen Druck gefördert werden, wobei sich der Druck auch in Abhängigkeit von der Fahrgeschwindigkeit der Feldspritze verändern kann und wobei der Druck hierbei bspw. zwischen in einem für die Praxis sinnvollen Bereich von ca. einem bar bis etwa acht bar liegen kann. Wahlweise kann der Druck auch größer oder kleiner sein.

Ebenso denkbar wäre es, einen Druckbegrenzer, bspw. in Form eines Druckbegrenzungsventils zur Definition der ersten Stellgröße bzw. zur Definition des Druckniveaus zu verwenden. So wäre es denkbar, dass mittels eines Druckerzeugungsgliedes jeweils ein Maximaldruck von bspw. acht bar oder mehr in der Leitung erzeugt wird, und dass dieser Maximaldruck, insbesondere im Bereich der Ausbringvorrichtungen, jeweils auf ein gewünschtes bzw. erforderliches Druckniveau mittels eines Druckbegrenzers reduziert wird. Auch ein Gleichdruckregler könnte zur Definition des Druckniveaus verwendet werden.

Anschließend erfolgt als Festlegung einer zweiten Stellgröße die Definition der Ausbringmenge je definierbarem Zeitintervall, wobei diese Ausbringmenge (je Zeitintervall) bspw. mittels eines Volumenstromreglers variabel einstellbar ist. Dieser Volumenstromregler kann mittels eines Abzweiges und mittels eines Verbindungsstückes bspw. in Form einer Verbindungsleitung, eines Gewinde- oder Rohrstutzens an die Leitung angeschlossen werden oder wahlweise auch direkt in die Leitung integriert sein.

Auch wäre es denkbar, dass keine direkte, sondern eine indirekte Volumenstromregelung vorhanden ist bzw. dass die Volumenstromregelung alleine bzw. im Wesentlichen durch die Veränderung des Druckniveaus erfolgt, wobei jedoch auch in diesem Fall mittels einer Rechnereinheit wiederum auf Basis des Druckniveaus der Volumenstrom bzw. die Ausbringmenge ermittelt wird und somit sowohl das Druckniveau als auch der Volumenstrom bzw. die Ausbringmenge definiert werden. Durch die Verwendung einer separaten bzw. einer direkten Volumenstromregelung kann jedoch die Ausbringmenge und die Verteilqualität noch weiter verbessert werden.

Als Volumenstromregler kann bspw. ein Regelventil oder eine einstellbare bzw. in ihrem Durchlassquerschnitt veränderliche Blende verwendet werden. Mittels einer Blende können auf einfache Art und Weise unterschiedliche Querschnitte eingestellt werden, wobei in Abhängigkeit des jeweils gewählten Querschnitts der Volumenstrom des Pflanzenschutzmittels eingestellt und/oder angepasst werden kann, d.h. bei einer Blende mit einem kleinen eingestellten Querschnitt kann der Volumenstrom des Pflanzenschutzmittels entsprechend gering bzw. kleiner eingestellt werden, während hingegen bei einer Blende mit einem größeren eingestellten Querschnitt ein entsprechend größerer Volumenstrom des Pflanzenschutzmittels eingestellt werden kann. Es wären aber auch andere Elemente zur Definition der Ausbringmenge denkbar. Um ein pulsierendes Ausbringmuster beim Ausbringen des Pflanzenschutzmittels zu erzeugen, könnte bspw. der Volumenstromregler so gestaltet sein, dass die Förderung von Pflanzenschutzmittel zumindest teilweise unterbrochen wird, wofür bspw. eine Pulsweitenmodulation Verwendung finden kann.

Auch wäre es denkbar, dass bspw. die Definition des Druckniveaus sowie der Ausbringmenge nur durch einen Volumenstromregler erfolgt. So wäre es denkbar, dass das Pflanzenschutzmittel in der Leitung jeweils mittels eines fest definierten Druckniveaus entlang dieser Leitung gefördert wird, mittels des Volumenstromreglers jedoch durch Veränderung der Ausbringmenge auch das Druckniveau entsprechend mit angepasst wird. Hierfür könnte auch wiederum ein Gleichdruckregler verwendet werden.

Die somit in der benötigten Ausbringmenge und unter Druck geförderte Pflanzenschutzflüssigkeit wird anschließend unter Festlegung einer dritten Stellgröße mittels wenigstens eines Zerstäubungselementes zerstäubt, wodurch bspw. in Abhängigkeit vom Druckniveau, von der Ausbringmenge sowie von der Art der Zerstäubung jeweils verschiedenste Verteilmuster erzeugt werden, ohne hierfür verschiedene Spritzdüsen zu benötigen. Das wenigstens eine Zerstäubungselement kann somit bspw. verschiedenste Tropfenspektren, verschiedenste Spritzkegel, verschiedenste Spritzwinkel oder dergleichen erzeugen bzw. diese auch jeweils auf verschiedenste Weise kombinieren.

Beim wenigstens einen Zerstäubungselement kann es sich bspw. um einen Prallteller handeln, welcher als ebene Platte, als konvexe Platte oder als konkave Platte (jeweils in Richtung zum geförderten und/oder davon abprallenden Spritzmittel gesehen) gebildet ist, wobei die Platte wahlweise oder zusätzlich bspw. mittels eines Aktors gedreht bzw. in ihrem Winkel in Bezug auf den vom Volumenstromregler erzeugten Flüssigkeitsstrahl verschwenkt werden kann. Auch wäre es denkbar, dass die Platte eine pulsierende bzw. zyklisch zwischen zwei Endlagen oszillierende Bewegung bzw. Schwenkbewegung durchführt, so dass die Platte bspw. ständig jeweils zwischen zwei Endlagen verschwenkt werden kann. Auch könnte die Platte in Vibration versetzt sein, wobei die Bewegungsrichtungen dieser Vibrationen normalerweise in etwa senkrecht zur Plattenoberfläche gerichtet sein können. Generell sind hier verschiedenste Möglichkeiten denkbar, wobei jeweils in Abhängigkeit der Bewegung und der Ausführung der Platte eine andere Zerstäubungscharakteristik erzeugt wird.

Neben der Verwendung einer Platte als Zerstäubungselement wäre es auch denkbar, den Auslass der Ausbringvorrichtung als flexible Leitung bzw. flexibles Element auszuführen, so dass jeweils durch eine Veränderung der Position des Auslasses bzw. durch bspw. eine größere oder kleinere Krümmung der flexiblen Leitung bzw. des flexiblen Elements jeweils unterschiedliche Verteilmuster erzeugt werden können.

Auch wäre es denkbar, als Zerstäubungselement einen aus dem Stand der Technik bekannt gewordenen Ultraschallzerstäuber zu verwenden. Aber auch ein sog. Piezozerstäuber wäre denkbar. Generell sind somit als Zerstäubungselemente verschiedenste Elemente vorstellbar, mittels welcher jeweils verschiedenste Verteilmuster erzeugt werden können.

Ebenso könnten elektrostatische Zerstäuber Verwendung finden. Auch könnte das Pflanzenschutzmittel entlang einer aktiven bzw. passiven Oberfläche entlang gleiten, wodurch eine sog. triboelektrische Aufladung entsteht und auf Basis dieser wiederum die Pflanzenschutzflüssigkeit zerstäubt wird. Auch eine unter Hochspannung stehende Elektrode könnte Verwendung finden und somit die Zerstäubung bspw. mittels Ionisation stattfinden.

Des Weiteren könnte die Zerstäubung bzw. das Zerstäubungselement mittels eines Luftvolumenstroms variiert werden bzw. das Zerstäubungselement als Luftelement ausgeführt sein, d. h. es könnte auch vorgesehen sein, dass die Zerstäubung der Pflanzenschutzflüssigkeit nur mittels des Luftvolumenstroms erfolgt. Insbesondere könnte ein Luftvolumenstrom dem Zerstäubungselement vor- und/oder nachgeordnet sein, wodurch mittels des Luftvolumenstroms bspw. die Richtung und die Form des Spritzkegels sowie das Tropfenspektrum entsprechend beeinflusst werden kann. So könnte bspw. auch die Kegelform des Spritzkegels beeinflusst werden.

Des Weiteren könnte der Luftvolumenstrom auch als Fördermedium der Pflanzenschutzflüssigkeit dienen. So könnte bspw. die Volumenstromregler entsprechend vom Luftvolumenstrom beeinflusst werden und bspw. von diesem umgeben sein.

Um jeweils bspw. einen Spritzkegel sowie einen Spritzwinkel in Bezug auf den Pflanzenbestand verändern zu können, könnte zusätzlich vorgesehen sein, dass das Zerstäubungselement in dessen Winkel veränderbar und/oder variabel einstellbar_ist, wobei wiederum die Zerstäubung des Pflanzenschutzmittels auf Basis des Winkels variieren kann.

Auch wäre es denkbar, dass bspw. zwei oder mehr Zerstäubungselemente vorgesehen sind, welche jeweils verschiedene Eigenschaften aufweisen bzw. welche jeweils verschiede Verteilmuster erzeugen, wobei durch Hintereinanderreihung von wenigstens zwei Zerstäubungselementen wiederum ein Verteilmuster erzeugt wird.

Es kann vorzugsweise vorgesehen sein, dass die Ansteuerung der Ausbringvorrichtung sowie die Variationen der Stellgrößen mittels einer Rechnereinheit erfolgen, mittels welcher Rechnereinheit die Stellgrößen derartig zueinander abgestimmt werden, dass jeweils ein für das jeweilige Pflanzenschutzmittel erforderliches Verteilmuster erzeugt wird. Außerdem kann vorgesehen sein, dass in der Rechnereinheit jeweils eine Auswertung erfolgt, mit welchem Druckniveau das Pflanzenschutzmittel entlang der Leitung gefördert wird, so dass auf Basis des Druckniveaus zumindest das wenigstens eine Zerstäubungselement entsprechend eingestellt werden kann.

Um dies noch weiter zu verbessern, kann entsprechend auch die jeweilige Ausbringmenge am Volumenstromregler eingestellt werden. Damit kann das wenigstens eine Zerstäubungselement in Abhängigkeit des Druckniveaus und der Volumenstromregelung mittels der Rechnereinheit angesteuert werden. Auch können an der Feldspritze entsprechende Messmittel vorgesehen sein, um die jeweiligen Werte der Stellgrößen zu ermitteln und diese an die Rechnereinheit zu übertragen.

Zusätzlich kann in der Rechnereinheit jeweils das gewünschte Verteilmuster eingegeben werden bzw. eingelesen werden. Auch kann die Rechnereinheit mit einer Datenbank in Verbindung stehen, in welcher Datenbank jeweils in Abhängigkeit des Pflanzenschutzmittels verschiedene Verteilmuster hinterlegt sein können. Auch kann die Rechnereinheit mit verschiedensten Sensoren, welche an der Feldspritze angebracht sein können, kommunizieren, mittels welchen Sensoren jeweils eine Analyse des Verteilmusters erfolgt und wiederum auf Basis dieser Analyse zumindest das wenigstens eine Zerstäubungselement entsprechend verstellt werden. Derartige Sensoren können bspw. als Wärmebildkameras ausgebildet sein. Ebenfalls können bei der Erzeugung der verschiedenen Verteilmuster auch Wetterdaten entsprechend in die Regelung mit einfließen.

Auch könnte die Rechnereinheit Positionsdaten in die Ansteuerung der Ausbringvorrichtung mit einarbeiten. So wäre es denkbar, anhand der Positionsdaten, welche bspw. durch ein GPS-Signal oder ein Galileo-Signal oder ein anderes Satellitennavigationssystem bereitgestellt werden, die Ausbringvorrichtung jeweils in Abhängigkeit der Position der Feldspritze anzusteuern und somit entlang des Spritzgestänges an den Ausbringvorrichtung jeweils verschiedenste Verteilmuster zu erzeugen. So wäre es auch denkbar, dass bspw. zwei benachbarte Ausbringvorrichtungen jeweils unterschiedliche Verteilmuster erzeugen, ohne hierfür unterschiedliche Spritzdüsen zu benötigen.

Neben dem jeweiligen Druck der Pflanzenschutzflüssigkeit, der Menge an Pflanzenschutzflüssigkeit sowie der Eigenschaften des Zerstäubungselementes kann die Rechnereinheit als weitere Stellgröße zusätzlich noch die Höhenführung des Spritzgestänges mit auswerten und auf Basis der weiteren Stellgröße das Verteilmuster variieren, d. h. es kann zusätzlich ermittelt werden, welchen Abstand die Ausbringvorrichtung vom Pflanzenbestand bzw. der landwirtschaftlichen Ackerfläche hat, wobei dies bspw. mit Abstandssensoren wie Ultraschallsensoren oder dergleichen erfolgen kann.

Es kann vorgesehen sein, dass als zusätzliche Stellgröße eine Geschwindigkeit der Feldspritze bei Geradeausfahrt und bei Kurvenfahrt ermittelt wird und auf Basis der zusätzlichen Stellgröße das Verteilmuster variiert wird. An der Feldspritze können Geschwindigkeitssensoren, Beschleunigungssensoren, Gyroskope oder dergleichen Geschwindigkeitsaufnehmer angebracht sein, um somit als weitere Stellgröße zu ermitteln, mit welcher Geschwindigkeit die Feldspritze über eine Ackerfläche bewegt wird. Zusätzlich könnten die Geschwindigkeitsaufnehmer so angebracht sein, dass mittels dieser auch eine Auswertung bezüglich einer Kurvenfahrt der Feldspritze erfolgt, so dass bspw. das Verteilmuster entlang des Spritzgestänges variiert werden kann, womit an den sich im Kurveninneren des Spritzgestänges befindenden Ausbringvorrichtungen ein anderes Verteilmuster erzeugt wird als an den sich im Kurvenäußeren des Spritzgestänges befindenden Ausbringvorrichtungen.

Auch kann vorgesehen sein, dass zumindest zwei Zerstäubungselemente mit unterschiedlichen Zerstäubungseigenschaften hintereinander vorgesehen sind. Dadurch kann die Einstellung eines Verteilmusters optimiert und verbessert werden. Zudem können unterschiedliche Verteilmuster ausgebildet werden.

In einer weiteren Ausgestaltungsform wäre es denkbar, dass die jeweiligen Elemente der Ausbringvorrichtung zu- und weggeschaltet werden. So könnte bspw. der Volumenstromregler so geschaltet werden, dass dieser wirkungslos wird. Auch könnte das Zerstäubungselement entsprechend zu- und weggeschaltet werden. Insbesondere bei der Verwendung von zwei oder mehr Zerstäubungselementen könnte eines derartig weggeschaltet werden, dass wieder ein gewünschtes Verteilmuster erzeugt wird. Auch ein Luftvolumenstrom, welcher vor und/oder nach dem Zerstäubungselement angebracht sein kann, könnte entsprechend zu- und weggeschaltet werden. Durch die Möglichkeit des beliebigen Zu- und Wegschaltens von Elementen der Ausbringvorrichtung kann somit die Variabilität der Ausbringvorrichtung bzw. der Feldspritze noch weiter erhöht werden. Sowohl das Zu- und Wegschalten von einzelnen Elementen als auch die Ansteuerung dieser Elemente kann mittels einer Rechnereinheit automatisiert erfolgen.

Zur Ansteuerung der Ausbringvorrichtungen bzw. der Stellgrößen kann in der Rechnereinheit ein Auswerteprogramm hinterlegt sein, welches unter Berücksichtigung aller Stellgrößen sowie Wetterdaten, Wirkstoffdaten des Pflanzenschutzmittels oder dergleichen jeweils ein optimales Verteilmuster errechnet und die Stellgrößen jeweils entsprechend variieren, wobei die Stellgrößen hierbei insbesondere unabhängig zueinander veränderbar sind.

Zusätzlich kann an der Ausbringvorrichtung ein Leuchtmittel angebracht sein, welches bspw. in Abhängigkeit, ob die Ausbringvorrichtung angeschaltet oder abgeschaltet ist, ebenfalls an- oder abgeschaltet sein kann. Auch wäre es denkbar, dass das Leuchtmittel in Abhängigkeit des Verteilmusters ebenso seine Leuchtintensität ändert.

Der Volumenstromregler sowie das Zerstäubungselement können ein gemeinsames Gehäuse bilden bzw. in ein gemeinsames Gehäuse integriert sein, welches Gehäuse bspw. mittels eines dem Gehäuse ebenfalls zugeordneten Verbindungsabschnittes mit der Leitung verbunden sein kann, in welcher das Pflanzenschutzmittel gefördert wird. Der Verbindungsabschnitt kann hierbei bspw. ein Gewinde oder ein sonstiges Verbindungselement aufweisen.

Mit der erfindungsgemäßen Feldspritze bzw. mit der vorgeschlagenen Ausbringvorrichtung können somit jegliche Verteilmuster erzeugt werden, ohne hierfür verschiedene Spritzdüsen zu benötigen. So können bspw. sog. Flachstrahlverteilmuster, gewölbte Verteilmuster, Doppelflachstrahlverteilmuster, alternierende Verteilmuster, oder sonstige beliebige Verteilmuster erzeugt werden.

Die Erfindung sieht weiterhin ein Verfahren zum Ausbringen von flüssigen Wirk- und/oder Pflanzenschutzmitteln mittels einer landwirtschaftlichen Feldspritze vor, wobei an dieser, insbesondere an einem höhenverstellbaren Spritzgestänge zumindest eine Ausbringvorrichtung zur Erzeugung von verschiedensten Verteilmuster angebracht ist.

Das Verfahren umfasst zumindest die folgenden Schritte:
- Definition einer ersten Stellgröße, welche Stellgröße durch ein Druckniveau definiert ist, mittels welches Druckniveaus das Pflanzenschutzmittel mittels einer Leitung entlang eines Spritzgestänges befördert wird,
- Definition einer zweiten Stellgröße, welche Stellgröße durch eine Ausbringmenge definiert ist, welche Ausbringmenge mittels eines Volumenstromreglers einstellbar ist,
- Definition einer dritten Stellgröße, welche Stellgröße durch eine Zerstäubung der Flüssigkeit definiert ist, welche Zerstäubung mittels wenigstens eines Zerstäubungselementes erfolgt,
wobei die Ansteuerung des Zerstäubungselements wiederum in Abhängigkeit des Druckniveaus und der Ausbringmenge erfolgt.

Die Ansteuerung der verschiedenen Stellgrößen erfolgt bspw. mittels einer Rechnereinheit, wobei in dieser jeweils eine Auswertung erfolgt, mit welchem Druckniveau das Pflanzenschutzmittel entlang der Leitung gefördert wird und auf Basis dieses Druckniveau anschließend zumindest das wenigstens eine Zerstäubungselement entsprechend eingestellt wird. Um dies noch weiter zu verbessern, kann entsprechend auch die jeweilige Ausbringmenge mit Hilfe eines Volumenstromreglers eingestellt werden. Auch können an der Feldspritze entsprechende Messmittel angebracht sein, um die jeweiligen Stellgrößen zu ermitteln.

Zusätzlich kann in der Rechnereinheit jeweils das gewünschte Verteilmuster eingegeben werden bzw. eingelesen werden. Auch kann die Rechnereinheit mit einer Datenbank in Verbindung stehen, in welcher Datenbank jeweils in Abhängigkeit des Pflanzenschutzmittels verschiedene Verteilmuster hinterlegt sein können. Auch kann die Rechnereinheit mit verschiedensten Sensoren, welche an der Feldspritze angebracht sein können, kommunizieren, mittels welchen Sensoren jeweils eine Analyse des Verteilmusters erfolgt und wiederum auf Basis dieser Analyse zumindest das wenigstens eine Zerstäubungselement entsprechend verstellt werden. Derartige Sensoren können bspw. als Wärmebildkameras ausgebildet sein. Ebenfalls können bei der Erzeugung der verschiedenen Verteilmuster auch Wetterdaten entsprechend mit in die Regelung einfließen.

Auch könnte die Rechnereinheit Positionsdaten mit in die Ansteuerung der Ausbringvorrichtung einarbeiten. So wäre es denkbar, anhand der Positionsdaten, welche bspw. durch ein GPS-Signal oder ein Galileo-Signal oder ein anderes Satellitennavigationssystem bereitgestellt werden, die Ausbringvorrichtung jeweils in Abhängigkeit der Position der Feldspritze anzusteuern und somit entlang des Spritzgestänges an den Ausbringvorrichtung jeweils verschiedenste Verteilmuster zu erzeugen. So wäre es auch denkbar, dass bspw. zwei benachbarte Ausbringvorrichtungen jeweils unterschiedliche Verteilmuster erzeugen, ohne hierfür unterschiedliche Spritzdüsen zu benötigen.

Neben dem jeweiligen Druck der Pflanzenschutzflüssigkeit, der Menge an Pflanzenschutzflüssigkeit sowie der Eigenschaften des Zerstäubungselementes kann die Rechnereinheit als weitere Stellgröße zusätzlich noch die Höhenführung des Spritzgestänges mit auswerten, d. h. es kann zusätzlich ermittelt werden, welchen Abstand die Ausbringvorrichtung vom Pflanzenbestand bzw. der landwirtschaftlichen Ackerfläche hat, wobei dies bspw. mit Abstandssensoren wie Ultraschallsensoren oder dergleichen erfolgen kann.

Es kann vorgesehen sein, dass als zusätzliche Stellgröße eine Geschwindigkeit der Feldspritze bei Geradeausfahrt und bei Kurvenfahrt ermittelt wird und auf Basis dieser das Verteilmuster variiert wird. An der Feldspritze können Geschwindigkeitssensoren, Beschleunigungssensoren, Gyroskope oder dergleichen Geschwindigkeitsaufnehmer angebracht sein, um somit als weitere Stellgröße zu ermitteln, mit welcher Geschwindigkeit die Feldspritze über eine Ackerfläche bewegt wird. Zusätzlich könnten die Geschwindigkeitsaufnehmer so angebracht sein, dass mittels dieser auch eine Auswertung bezüglich einer Kurvenfahrt der Feldspritze erfolgt, so dass bspw. das Verteilmuster entlang des Spritzgestänges variiert werden kann, womit an den sich im Kurveninneren des Spritzgestänges befindenden Ausbringvorrichtungen ein anderes Verteilmuster erzeugt wird als an den sich im Kurvenäußeren des Spritzgestänges befindenden Ausbringvorrichtungen.

In einer weiteren Ausgestaltungsform wäre es denkbar, dass die jeweiligen Elemente der Ausbringvorrichtung zu- und weggeschaltet werden. So könnte bspw. der Volumenstromregler so geschaltet werden, dass dieser wirkungslos wird. Auch könnte das Zerstäubungselement entsprechend zu- und weggeschaltet werden. Insbesondere bei der Verwendung von zwei oder mehr Zerstäubungselementen könnte eines derartig weggeschaltet werden, dass wieder ein gewünschtes Verteilmuster erzeugt wird. Auch ein Luftvolumenstrom, welcher vor und/oder nach dem Zerstäubungselement angebracht sein kann, könnte entsprechend zu- und weggeschaltet werden. Durch die Möglichkeit des beliebigen Zu- und Wegschaltens von Elementen der Ausbringvorrichtung kann somit die Variabilität der Ausbringvorrichtung bzw. der Feldspritze noch weiter erhöht werden. Sowohl das Zu- und Wegschalten von einzelnen Elementen als auch die Ansteuerung dieser Elemente mittels einer Rechnereinheit kann automatisiert erfolgen.

Zur Ansteuerung der Ausbringvorrichtungen bzw. der Stellgrößen kann in der Rechnereinheit ein Auswerteprogramm hinterlegt sein, welches unter Berücksichtigung aller Stellgrößen sowie Wetterdaten, Wirkstoffdaten des Pflanzenschutzmittels oder dergleichen jeweils ein optimales Verteilmuster errechnet und die Stellgrößen jeweils entsprechend variieren, wobei die Stellgrößen hierbei insbesondere unabhängig zueinander veränderbar sind.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Hierbei zeigen:
- Figur 1: eine Seitenansicht einer als selbstfahrende Maschine ausgeführten landwirtschaftlichen Feldspritze;
- Figur 2A: eine schematische Darstellung einer Ausbringvorrichtung mit einem Volumenstromregler und einem als Prallteller ausgebildeten Zerstäubungselement, wobei der Winkel des Pralltellers steil ausgebildet ist und ein grobes Tropfenspektrum erzeugt wird;
- Figur 2B: eine schematische Darstellung einer Ausbringvorrichtung mit einem Volumenstromregler und einem als Prallteller ausgebildeten Zerstäubungselement, wobei der Winkel des Pralltellers flach ausgebildet ist und ein grobes Tropfenspektrum erzeugt wird;
- Figur 2C: eine schematische Darstellung einer Ausbringvorrichtung mit einem Volumenstromregler und einem als Prallteller ausgebildeten Zerstäubungselement, wobei der Winkel des Pralltellers steil ausgebildet ist und ein feines Tropfenspektrum erzeugt wird;
- Figur 2D: eine schematische Darstellung einer Ausbringvorrichtung mit einem Volumenstromregler und einem als Prallteller ausgebildeten Zerstäubungselement, wobei der Winkel des Pralltellers steil ausgebildet ist und ein feines Tropfenspektrum erzeugt wird;
- Figur 3A: eine schematische Darstellung einer Ausbringvorrichtung mit einem Volumenstromregler und einem als flexibles Element ausgebildeten Zerstäubungselement, wobei der Winkel des flexiblen Elements flach ausgebildet ist und ein grobes Tropfenspektrum erzeugt wird;
- Figur 3B: eine schematische Darstellung einer Ausbringvorrichtung mit einem Volumenstromregler und einem als flexibles Element ausgebildeten Zerstäubungselement, wobei der Winkel des flexiblen Elements steil ausgebildet ist und ein grobes Tropfenspektrum erzeugt wird;
- Figur 4A: eine schematische Darstellung einer Ausbringvorrichtung mit einem Volumenstromregler und einem als Ultraschallzerstäuber ausgebildeten Zerstäubungselement, wobei ein grobes Tropfenspektrum mit großem Spritzkegel erzeugt wird;
- Figur 4B: eine schematische Darstellung einer Ausbringvorrichtung mit einem Volumenstromregler und einem als Ultraschallzerstäuber ausgebildeten Zerstäubungselement, wobei ein grobes Tropfenspektrum mit kleinem Spritzkegel erzeugt wird.

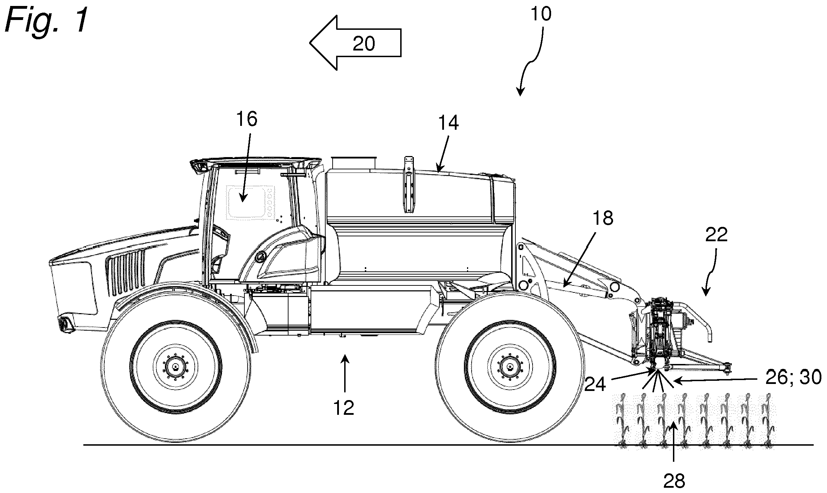

Für gleiche oder gleich wirkende Elemente der Erfindung werden in den Figuren 1 bis 4B jeweils identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße landwirtschaftliche Feldspritze oder das erfindungsgemäße Verfahren ausgestaltet sein können und stellen keine abschließende Begrenzung dar.

Ein Ausführungsbeispiel einer landwirtschaftlichen Feldspritze 10 geht aus der Figur 1 hervor, wobei diese als selbstfahrende Feldspritze 10 ausgeführt ist. Die Feldspritze 10 dient insbesondere zum Ausbringen von flüssigen Pflanzenschutzmitteln, wie Pestiziden, Fungiziden, Dünger oder dergleichen. Die Feldspritze 10 umfasst ein Trägerfahrzeug 12 mit eigenem Antrieb, einen Rahmen zum Tragen der Baugruppen der Feldspritze 10, zumindest einen Vorratsbehälter 14 zum Mitführen und Bereitstellen der auszubringenden Pflanzenschutzflüssigkeit, eine Rechnereinheit 16 zum Steuern der einzelnen Baugruppen sowie deren Parameter und Stellgrößen sowie ein gegenüber dem Trägerfahrzeug 12 mittels Stellelementen 18 höhenverstellbares und sich quer zur Fahrtrichtung 20 erstreckendes Spritzgestänge 22. Am Spritzgestänge 22 ist zumindest eine Ausbringvorrichtung 24 zur Verteilung der Pflanzenschutzflüssigkeit angeordnet, wobei mittels der Ausbringvorrichtung 24 hierzu jeweils verschiedenste Verteilmuster 26 unter anderem in Form eines zu einem Pflanzenbestand 28 hingerichteten Spritzkegels 30 zu erzeugen.

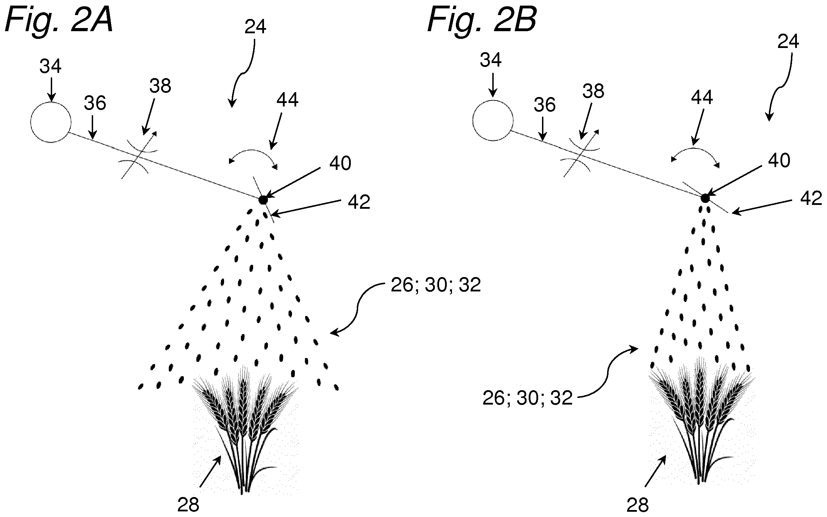

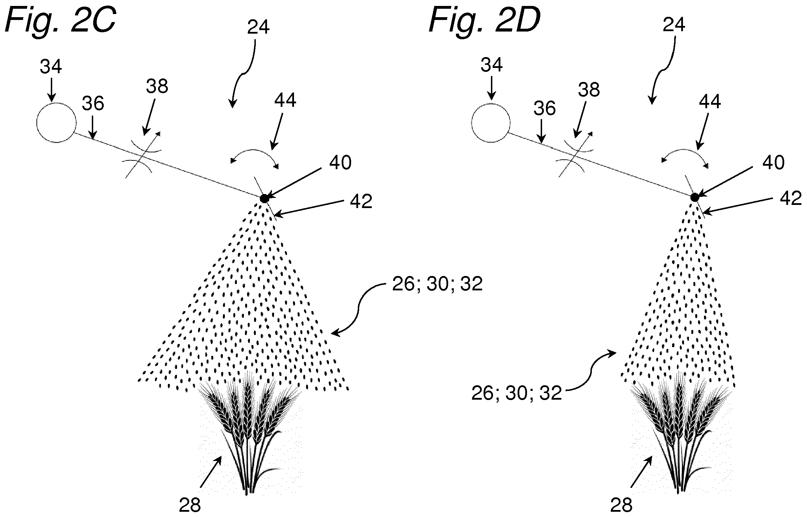

Weitere Details einer Ausbringvorrichtung 24, wie sie an der erfindungsgemäßen landwirtschaftlichen Feldspritze 10 Verwendung finden kann, gehen aus der Figur 2A bis 2D hervor. In diesen Figuren werden jeweils verschiedene Verteilmuster 26 gezeigt, welche sich jeweils aus einem großen Spritzkegel 30 (Fig. 2A und Fig. 2C) und einem kleinen Spritzkegel 30 (Fig. 2B und Fig. 2D) sowie aus einem groben Tropfenspektrum 32 (Fig. 2A und 2B) sowie einem feinen Tropfenspektrum 32 (Fig. 2C und Fig. 2D) zusammensetzen, wobei die Verteilmuster 26 bzw. die ein Verteilmuster 26 bildende Pflanzenschutzflüssigkeit über einem Pflanzenbestand 28 ausgebracht wird, welcher jeweils schematisch dargestellt wird.

Zunächst erfolgt jeweils eine Bereitstellung einer Pflanzenschutzflüssigkeit mittels einer im Querschnitt dargestellten Leitung 34, welche bspw. als Ringleitung entlang des Spritzgestänges 22 geführt sein kann. Die Pflanzenschutzflüssigkeit kann innerhalb dieser Leitung 34 mit einem veränderbaren Druckniveau gefördert werden, welches Druckniveau bspw. in Abhängigkeit einer Fahrgeschwindigkeit der Feldspritze 12 verändert werden und zwischen 1 Bar und 8 Bar liegen kann. Dieses Druckniveau kann somit die erste Stellgröße bilden.

Die Pflanzenschutzflüssigkeit wird anschließend beispielsweise mittels eines Verbindungsabschnitts 36 in die Ausbringvorrichtung 24 übergeben. Die somit mittels eines variablen Druckniveaus bereitgestellte Pflanzenschutzflüssigkeit wird anschließend mittels eines Volumenstromreglers 38 jeweils auf eine variabel regelbare Ausbringmenge geregelt. Die Volumenstromregelung bildet somit die zweite Stellgröße.

Die somit definierte Ausbringmenge an Pflanzenschutzflüssigkeit wird wiederum anschließend an ein Zerstäubungselement 40 weitergegeben und von diesem entsprechend zerstäubt. Dabei ist das Zerstäubungselement 40 variabel einstellbar und wird insbesondere mittels einer Rechnereinheit 16 in Abhängigkeit des Druckniveaus und/oder der Ausbringmenge angesteuert, wodurch das Pflanzenschutzmittel zu einem gewünschten Verteilmuster 26 zerstäubt wird. Das Zerstäuben bildet somit die dritte Stellgröße.

Die drei Stellgrößen können somit jeweils variabel und unabhängig zueinander verstellt werden, um somit, bspw. in Abhängigkeit der jeweils zu verteilenden Pflanzenschutzflüssigkeiten verschiedenste Verteilmuster 26 erzeugen zu können.

Im Ausführungsbeispiel der Figuren 2 ist das Zerstäubungselement 40 als Prallteller 42 ausgeführt, welcher Prallteller 42 eine ebene Platte aufweist. Um verschiedene Verteilmuster 26 mit verschiedenen Spritzkegel 30 bzw. Tropfenspektren 32 erzeugen zu können, kann jeweils der Winkel 44 des Pralltellers 42 in Bezug auf den Pflanzenbestand 28 bzw. in Bezug auf den vom Volumenstromregler 38 definierten Flüssigkeitsstrom geändert werden. Somit lassen sich mittels der erfindungsgemäßen Feldspritze 10 bzw. mittels deren Ausbringvorrichtung 24 durch Variation des Druckniveaus, mittels welchem die Pflanzenschutzflüssigkeit bereitgestellt wird, der Ausbringmenge an Pflanzenschutzflüssigkeit sowie durch Veränderung des Winkels 44 des Pralltellers 42 jegliche Verteilmuster 26 erzeugen, ohne hierfür separate oder spezielle Spritzdüsen oder dergleichen zu benötigen.

Um dies noch weiter zu verbessern, könnte darüber hinaus noch die Höhenführung des Spritzgestänges 22 sowie die Geschwindigkeit als Feldspritze 10 entsprechend mit ausgewertet werden und ebenso mittels der Rechnereinheit 16 das Verteilmuster 26 entsprechend variiert werden.

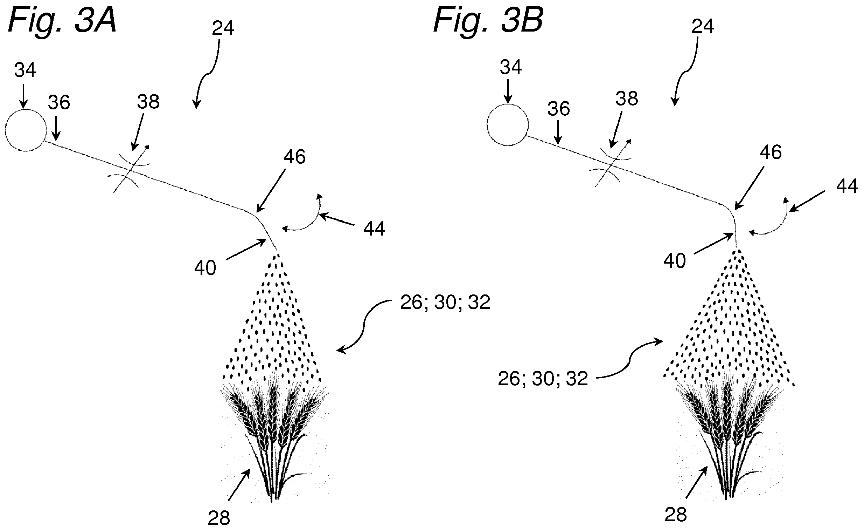

Eine weitere Ausführungsvariante einer Ausbringvorrichtung 24 geht aus der Figur 3A und 3B hervor. Hierbei werden auch hier wiederum verschiedene Verteilmuster 26 erzeugt, welche bspw. einen kleinen Spritzkegel 30 (Fig. 3A) oder einen großen Spritzkegel 30 (Fig. 3B) sowie jeweils ein grobes Tropfenspektrum 32 aufweisen, wobei die Verteilmuster 26 bzw. die ein Verteilmuster 26 bildende Pflanzenschutzflüssigkeit über einem Pflanzenbestand 28 ausgebracht wird.

Über eine im Querschnitt dargestellte Leitung 34, welche bspw. als Ringleitung entlang eines Spritzgestänges 22 geführt sein, kann erfolgt zunächst die Bereitstellung der Pflanzenschutzflüssigkeit. Die Pflanzenschutzflüssigkeit kann innerhalb dieser Leitung 34 mit einem veränderbaren Druckniveau gefördert werden, welches Druckniveau bspw. in Abhängigkeit einer Fahrgeschwindigkeit der Feldspritze 10 verändert werden und zwischen 1 Bar und 8 Bar liegen kann. Die Pflanzenschutzflüssigkeit wird anschließend bspw. mittels eines Verbindungsabschnitts 36 an eine Ausbringvorrichtung 24 übergeben. Die somit mittels eines definierten Druckniveaus bereitgestellte Pflanzenschutzflüssigkeit wird anschließend mittels eines Volumenstromreglers 38 jeweils auf eine gewünschte Ausbringmenge geregelt. Die somit exakt definierte Ausbringmenge an Pflanzenschutzflüssigkeit wird wiederum anschließend an ein Zerstäubungselement 40 weitergegeben und von diesem entsprechend zerstäubt. Das Zerstäubungselement 40 ist variabel einstellbar und ist insbesondere mittels einer Rechnereinheit 16 in Abhängigkeit des Druckniveaus und/oder der Ausbringmenge ansteuerbar, wodurch das Pflanzenschutzmittel zu einem gewünschten Verteilmuster 26 zerstäubt wird.

In den Figuren 3A und 3B ist das Zerstäubungselement 40 als flexible Leitung bzw. als flexibles Element 46 ausgeführt, bei welchem die Verteilmuster 26 bspw. durch Veränderung eines Winkels 44 dieses Elements 46 in Bezug auf den Pflanzenbestand 28 bzw. in Bezug auf den vom Volumenstromregler 38 definierten Flüssigkeitsstrom geändert werden. Somit lassen sich mittels der Ausbringvorrichtung 24 durch Variation des Druckniveaus der Pflanzenschutzflüssigkeit sowie durch Veränderung der Ausbringmenge sowie durch Veränderung des Winkels 44 des flexiblen Elements 46 jegliche Verteilmuster 26 erzeugen, ohne hierfür separate oder spezielle Spritzdüsen oder dergleichen zu benötigen.

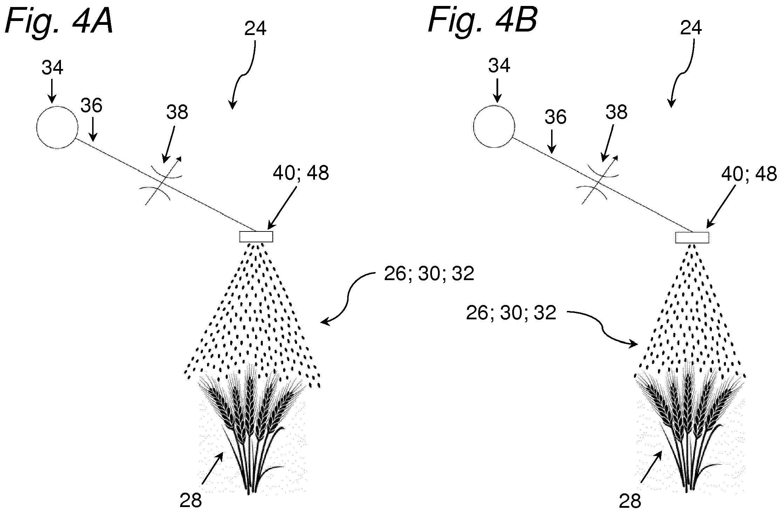

Eine weitere Ausgestaltungsvariante einer Ausbringvorrichtung geht aus den Figuren 4A und 4B hervor, wobei das Zerstäubungselement 40 hierbei als Ultraschallzerstäuber 48 ausgeführt ist, mittels welchem verschiedene Verteilmuster 26 erzeugt werden, welche bspw. einen großen Spritzkegel 30 (Fig. 4A) oder einen kleinen Spritzkegel 30 (Fig. 4B) sowie jeweils ein grobes Tropfenspektrum 32 aufweisen, wobei die Verteilmuster 26 bzw. die ein Verteilmuster 26 bildende Pflanzenschutzflüssigkeit über einem Pflanzenbestand 28 ausgebracht wird.

Auch beim Ausführungsbeispiel der Figur 4 erfolgt jeweils eine Bereitstellung einer Pflanzenschutzflüssigkeit mittels einer im Querschnitt dargestellten Leitung 34, welche bspw. als Ringleitung entlang eines Spritzgestänges 22 geführt sein kann. Die Pflanzenschutzflüssigkeit kann innerhalb dieser Leitung 34 mit einem veränderbaren Druckniveau gefördert werden, welches Druckniveau bspw. in Abhängigkeit einer Fahrgeschwindigkeit der Feldspritze 10 verändert werden und zwischen 1 Bar und 8 Bar liegen kann. Die Pflanzenschutzflüssigkeit wird anschließend bspw. mittels eines Verbindungsabschnitts 36 an eine Ausbringvorrichtung 24 übergeben. Die somit mittels eines definierten Druckniveaus bereitgestellte Pflanzenschutzflüssigkeit wird anschließend mittels eines Volumenstromreglers 38 jeweils auf eine gewünschte Ausbringmenge geregelt. Die somit exakt definierte Ausbringmenge wird wiederum anschließend an ein Zerstäubungselement 40 weitergegeben und von diesem entsprechend zerstäubt. Das Zerstäubungselement 40 ist variabel einstellbar und ist insbesondere mittels einer Rechnereinheit 16 in Abhängigkeit des Druckniveaus und/oder der Ausbringmenge ansteuerbar, wodurch das Pflanzenschutzmittel zu einem gewünschten Verteilmuster 26 zerstäubt wird.

Im Ausführungsbeispiel der Figuren 4A und 4B ist das Zerstäubungselement 40 als Ultraschallzerstäuber 48 ausgeführt. Um verschiedene Verteilmuster 26 mit verschiedenen Spritzkegel 30 bzw. Tropfenspektren 32 zu erzeugen, können jeweils die Parameter bzw. die Stellgrößen des Zerstäubungselements 40 bzw. des Ultraschallzerstäubers 48 entsprechend verändert werden. Somit lassen sich mittels der Ausbringvorrichtung 24 durch Variation des Druckniveaus, der Änderung der Ausbringmenge sowie durch Veränderung der Parameter und Stellgrößen des Ultraschallzerstäubers 48 jegliche Verteilmuster 26 erzeugen, ohne hierfür jeweils separate Spritzdüsen oder dergleichen zu benötigen. Um die Verteilung noch weiter zu verbessern, könnte zusätzlich vorgesehen sein, dass ebenso der Winkel des Ultraschallzerstäubers 48 in Bezug auf den Pflanzenbestand 28 veränderbar wäre.

Es sei noch darauf hingewiesen, das in den Ausführungsbeispielen der Figuren 2 bis 4 jeweils nur ein Zerstäubungselement 40 abgebildet ist. Es wäre jedoch ebenso denkbar, dass jeweils zwei oder mehr Zerstäubungselemente 40 gemeinsam kombiniert werden.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Feldspritze, landwirtschaftliche Feldspritze
- 12: Trägerfahrzeug
- 14: Vorratsbehälter
- 16: Rechnereinheit
- 18: Stellelement
- 20: Fahrtrichtung
- 22: Spritzgestänge
- 24: Ausbringvorrichtung
- 26: Verteilmuster
- 28: Pflanzenbestand
- 30: Spritzkegel
- 32: Tropfenspektrum
- 34: Leitung
- 36: Verbindungsabschnitt
- 38: Volumenstromregler
- 40: Zerstäubungselement
- 42: Prallteller
- 44: Winkel
- 46: flexible Leitung, flexibles Element
- 48: Ultraschallzerstäuber

## Patentansprüche

1. Landwirtschaftliche Feldspritze (10) zum Ausbringen und/oder Verteilen von flüssigen Wirk- und/oder Pflanzenschutzmitteln, wobei die Verteilung des flüssigen Wirk- und/oder Pflanzenschutzmittels mittels zumindest einer an einem höhenverstellbar an der Feldspritze (10) angebauten Spritzgestänge (22) montierten Ausbringvorrichtung (24) erfolgt, welche Ausbringvorrichtung (24) dazu ausgebildet bzw. in einer Weise vorbereitet und dafür ausgestattet ist, auf Basis von wenigstens drei Stellgrößen steuerbare und/oder veränderliche und/oder verschiedenartige Verteilmuster (26) zu erzeugen,
**dadurch gekennzeichnet, dass** zumindest eine der wenigstens drei Stellgrößen variabel einstellbar ist,
und dass eine erste Stellgröße durch ein Druckniveau definiert ist, das für eine Beförderung des flüssigen Wirk- und/oder Pflanzenschutzmittels mittels oder in einer zumindest entlang eines Teilabschnittes des Spritzgestänges (22) verlaufende Leitung (34) sorgt,
und dass eine zweite Stellgröße durch eine definierte oder definierbare und/oder variabel steuerbare Ausbringmenge an flüssigem Wirk- und/oder Pflanzenschutzmittel innerhalb eines definierten Zeitraumes gebildet ist, wobei die Ausbringmenge mittels eines Volumenstromreglers (38) einstellbar ist,
sowie dass eine dritte Stellgröße durch eine Zerstäubung oder einen Zerstäubungsgrad des ausgebrachten flüssigen Wirk- und/oder Pflanzenschutzmittels definiert ist, wobei die Zerstäubung bzw. der Zerstäubungsgrad mittels wenigstens eines Zerstäubungselementes (40) verschiedenartig und/oder variabel einstellbar ist.

2. Landwirtschaftliche Feldspritze nach Anspruch 1, **dadurch gekennzeichnet, dass** mindestens zwei der wenigstens drei Stellgrößen jeweils unabhängig voneinander einstellbar sind.

3. Landwirtschaftliche Feldspritze nach Anspruch 1 oder 2, **dadurch gekennzeichnet, dass** die mindestens drei Stellgrößen jeweils unabhängig voneinander einstellbar sind.

4. Landwirtschaftliche Feldspritze nach einem der Ansprüche 1 bis 3, **dadurch gekennzeichnet, dass** die Ansteuerung der Ausbringvorrichtung (24) mittels einer Rechnereinheit (16) erfolgt, mittels welcher Rechnereinheit (16) die mindestens drei Stellgrößen derartig zu- oder aufeinander abgestimmt werden, dass jeweils ein für das jeweilige flüssige Wirk- und/oder Pflanzenschutzmittel erforderliches Verteilmuster (26) erzeugbar ist oder erzeugt wird.

5. Landwirtschaftliche Feldspritze nach zumindest einem der vorhergehenden Ansprüche, **dadurch gekennzeichnet, dass** das wenigstens eine Zerstäubungselement (40) in Abhängigkeit vom Druckniveau und der Volumenstromregelung mittels der Rechnereinheit (16) ansteuerbar ist.

6. Landwirtschaftliche Feldspritze nach zumindest einem der vorhergehenden Ansprüche, **dadurch gekennzeichnet, dass** als zusätzliche Stellgröße eine Höhenführung des Spritzgestänges ermittelbar ist und auf Basis der zusätzlichen Stellgröße das Verteilmuster (26) variierbar und/oder einstellbar ist.

7. Landwirtschaftliche Feldspritze nach zumindest einem der vorhergehenden Ansprüche, **dadurch gekennzeichnet, dass** als zusätzliche Stellgröße eine Geschwindigkeit der Feldspritze bei Geradeausfahrt und/oder bei Kurvenfahrt ermittelbar ist und auf Basis der zusätzlichen Stellgröße das Verteilmuster (26) variierbar und/oder einstellbar ist.

8. Landwirtschaftliche Feldspritze nach zumindest einem der vorhergehenden Ansprüche, **dadurch gekennzeichnet, dass** das Zerstäubungselement (40) als Ultraschallzerstäuber (48) oder als Piezozerstäuber oder Ionisationszerstäuber oder dergl. ausgebildet ist, oder dass das Zerstäubungselement auf Basis einer elektrostatischen Aufladung das flüssige Wirk- und/oder Pflanzenschutzmittel zerstäubt.

9. Landwirtschaftliche Feldspritze nach zumindest einem der vorhergehenden Ansprüche, **dadurch gekennzeichnet, dass** der Winkel des Zerstäubungselements (40) in Bezug auf den Pflanzenbestand (28) veränderbar und/oder variabel einstellbar ist.

10. Landwirtschaftliche Feldspritze nach zumindest einem der vorhergehenden Ansprüche, **dadurch gekennzeichnet, dass** das Zerstäubungselement (40) als Prallteller (42) ausgebildet ist oder einen solchen aufweist.

11. Landwirtschaftliche Feldspritze nach Anspruch 9 oder 10, **dadurch gekennzeichnet, dass** der Winkel (44) des Pralltellers (42) in Bezug auf einen Flüssigkeitsstrahl und/oder den Pflanzenbestand (28) variierbar und/oder einstellbar ist und/oder dass der Prallteller (42) pulsierend ausgebildet ist.

12. Landwirtschaftliche Feldspritze nach einem der Ansprüche 9 bis 11, **dadurch gekennzeichnet, dass** der Prallteller (42) eine ebene, konvexe oder konkave Platte aufweist.

13. Landwirtschaftliche Feldspritze nach zumindest einem der vorhergehenden Ansprüche, **dadurch gekennzeichnet, dass** das Zerstäubungselement (40) als flexibles Element (46) ausgeführt ist, dessen Winkel veränderbar und/oder variabel einstellbar ist.

14. Landwirtschaftliche Feldspritze nach zumindest einem der vorhergehenden Ansprüche, **dadurch gekennzeichnet, dass** zumindest zwei Zerstäubungselemente (40) mit unterschiedlichen Zerstäubungseigenschaften hintereinander angeordnet sind.

15. Landwirtschaftliche Feldspritze nach zumindest einem der vorhergehenden Ansprüche, **dadurch gekennzeichnet, dass** der Ausbringvorrichtung (24) und/oder dem Zerstäubungselement (40) ein Luftvolumenstrom zugeordnet ist.

16. Landwirtschaftliche Feldspritze nach zumindest einem der vorhergehenden Ansprüche, **dadurch gekennzeichnet, dass** der Volumenstromregler (38) und das Zerstäubungselement (40) in ein gemeinsames Gehäuse integriert sind.

17. Verfahren zum Ausbringen von flüssigen Wirk- und/oder Pflanzenschutzmitteln, mittels einer landwirtschaftlichen Feldspritze (10), wobei an der Feldspritze (10) zumindest eine Ausbringvorrichtung (24) zur Verteilung des flüssigen Wirk- und/oder Pflanzenschutzmittels angeordnet ist, wobei das Verfahren zumindest folgende Schritte umfasst:
- Definition einer ersten Stellgröße, welche Stellgröße durch ein Druckniveau definiert ist, wobei das Druckniveau für eine Beförderung des Pflanzenschutzmittels mittels oder in einer Leitung (34), die entlang eines Spritzgestänges (22) verläuft, sorgt,
- Definition einer zweiten Stellgröße, welche Stellgröße durch eine Ausbringmenge definiert ist, welche Ausbringmenge mittels eines Volumenstromreglers (38) einstellbar ist,
- Definition einer dritten Stellgröße, welche Stellgröße durch eine Zerstäubung oder einen Zerstäubungsgrad der Flüssigkeit definiert ist, welche Zerstäubung mittels wenigstens eines Zerstäubungselementes (40) erfolgt,
**dadurch gekennzeichnet, dass** eine variable Ansteuerung des Zerstäubungselements (40) in Abhängigkeit des Druckniveaus und/oder der Ausbringmenge erfolgt.

18. Verfahren nach Anspruch 17, **dadurch gekennzeichnet, dass** die Ansteuerung der Ausbringvorrichtung (24) bzw. von deren Stellgrößen mittels einer Rechnereinheit (16) erfolgt.

19. Verfahren nach Anspruch 17 oder 18, **dadurch gekennzeichnet, dass** als zusätzliche Stellgröße eine Höhenführung des Spritzgestänges ermittelt wird und auf Basis der zusätzlichen Stellgröße das Verteilmuster (26) variiert und/oder eingestellt wird.

20. Verfahren nach einem der Ansprüche 17 bis 19, **dadurch gekennzeichnet, dass** als zusätzliche Stellgröße eine Geschwindigkeit der Feldspritze bei Geradeausfahrt und/oder bei Kurvenfahrt ermittelt wird und auf Basis dieser das Verteilmuster (26) variiert und/oder eingestellt wird.
